# EUROPÄISCHE PATENTSCHRIFT

(11) **EP 1 809 507 B1**
(45) Veröffentlichungstag und Bekanntmachung des Hinweises auf die Patenterteilung: **20.02.2008**
(21) Anmeldenummer: 05799923.7
(22) Anmeldetag: 03.11.2005
(51) Int. Cl.: B60K 17/10, F16H 61/40, F16H 61/46

(54) **HYDROSTATISCHER ANTRIEB**
HYDROSTATIC DRIVE
MECANISME D'ENTRAINEMENT HYDROSTATIQUE

(30) Priorität: 12.11.2004 DE 102004054744
(43) Veröffentlichungstag der Anmeldung: 25.07.2007
(73) Patentinhaber: Brueninghaus Hydromatik GmbH, 89275 Elchingen (DE)
(72) Erfinder: SCHNIEDERJAN, Reinhold, 89233 Neu-Ulm (DE); VOGL, Karl-Heinz, 88444 Ummendorf (DE); WIBBERG, Bernhard, 59590 Geseke (DE)
(74) Vertreter: Körfer, Thomas
(86) Internationale Anmeldenummer: PCT/EP2005/011778
(87) Internationale Veröffentlichungsnummer: WO 2006/050854

(56) Entgegenhaltungen:
- DE-A1- 19 930 997
- DE-A1- 19 934 782
- US-A- 5 913 950
- PATENT ABSTRACTS OF JAPAN Bd. 2002, Nr. 05, 3. Mai 2002 (2002-05-03) -& JP 2002 022005 A (KAYABA IND CO LTD), 23. Januar 2002 (2002-01-23)

## Beschreibung

Die Erfindung betrifft einen hydrostatischen Antrieb mit einer Hydropumpe und einem Hydromotor in einem geschlossenen Kreislauf.

Bei hydrostatischen Antrieben, wie sie beispielsweise in Arbeitsmaschinen verwendet werden, sind eine Hydropumpe und ein Hydromotor über zwei Arbeitsleitungen miteinander verbunden. Die Hydropumpe wird im Regelfall durch einen Verbrennungsmotor angetrieben. Abhängig von der Betriebssituation kann es vorkommen, dass der Hydromotor gegen das Bremsmoment des Verbrennungsmotors arbeitet. Übersteigt die dabei auftretende Bremsleistung das Bremsmoment des Motors, so führt dies zu einer unzulässigen Drehzahlerhöhung des Verbrennungsmotors, wodurch dieser im schlimmsten Fall zerstört werden kann.

Um eine solche unzulässige Drehzahlerhöhung des Verbrennungsmotors zu vermeiden, ist es aus der DE 102 41 950 A1 bekannt, in der stromabwärts des Hydromotors gelegenen Arbeitsleitung ein Druckventil vorzusehen, durch welches durch eine Erhöhung des Strömungswiderstands in der Arbeitsleitung der auf der Saugseite der Hydropumpe wirkende Druck reduziert wird. Zum Betätigen des Druckventils ist ein hydraulisches Betätigungselement vorgesehen, wobei der in dem hydraulischen Betätigungselement wirkende Druck durch ein Steuerventil eingestellt wird. Steigt der Druck stromabwärts des Druckventils auf einen höheren Wert, wird das Betätigungselement so mit Druck beaufschlagt, dass das Druckventil in Richtung zunehmender Schließstellung beaufschlagt wird. Diese Verstellung führt zu einem höheren Druckabfall an dem Druckventil, so dass auf die Saugseite der Hydropumpe ein reduzierter Druck wirkt und damit eine unzulässige Drehzahlerhöhung des Antriebsaggregats verhindert wird.

Der beschriebene hydrostatische Antrieb hat den Nachteil, dass das gesamte Fördervolumen, welches in der Arbeitsleitung gefördert wird, durch das Druckventil gesteuert werden muss. Eine solche Steuerung mittels eines hydraulischen Betätigungselements sowie eines Mehrwegeventils erfordert einen erheblichen konstruktiven Aufwand. Zudem lässt es sich nicht vermeiden, dass auf Grund des hohen Druckabfalls, der an dem Druckventil herrscht, in dem geschlossenen hydraulischen Kreislauf eine erhebliche Wärme erzielt wird.

Die DE 19 934 782 A1 offenbart einen hydrostatischen Antrieb nach dem Oberbegriff des Anspruchs 1. Der Erfindung liegt die Aufgabe zu Grunde, einen hydrostatischen Antrieb zu schaffen, bei dem ein Überschreiten des maximalen Stützmoments eines Antriebsmotors durch Begrenzung des durch die Hydropumpe strömenden Volumenstroms verhindert wird.

Die Aufgabe wird durch den erfindungsgemäßen hydrostatischen Antrieb mit den Merkmalen des Anspruchs 1 gelöst.

Der erfindungsgemäße hydrostatische Antrieb hat den Vorteil, dass durch einen Volumenstromteiler in Abhängigkeit von einem in der Arbeitsleitung geförderten Volumenstrom ein Teilvolumenstrom aus der Arbeitsleitung abgezweigt wird. Der durch die Arbeitsleitung fließende Volumenstrom wird damit aufgeteilt in einen Volumenstrom, der durch die Hydropumpe gefördert wird, und einen Teilvolumenstrom, der aus der Arbeitsleitung entnommen wird. Durch das Entnehmen eines Teilvolumenstroms aus der Arbeitsleitung wird die hydraulische Leistung, die der Hydropumpe zugeführt wird, reduziert, ohne dass es zu einer Hitzeentwicklung an einer hierzu vorgesehenen variablen Drossel in der Arbeitsleitung bedarf.

Die entnommene Menge an Druckmittel wird dabei in Abhängigkeit von dem in der Arbeitsleitung geförderten Volumenstrom geregelt. Durch das Aufteilen des gesamten Volumenstroms in einen Teilvolumenstrom und einen Volumenstrom, der weiter der Hydropumpe zugeführt wird, muss nur das Abzweigen des Teilvolumenstroms geregelt werden. Der restliche Volumenstrom kann unbeeinflusst bleiben, wodurch die Konstruktion vereinfacht wird.

Die in den Unteransprüchen aufgeführten Maßnahmen betreffen vorteilhafte Weiterbildungen des erfindungsgemäßen hydrostatischen Antriebs.

Besonders vorteilhaft ist es, die Menge entnommenen Druckmittels durch einen Steuerdruck zu regeln, der seinerseits von einem Volumenstrom in der Arbeitsleitung abhängig ist. Hierzu ist es insbesondere vorteilhaft, ein Steuerdruckregelventil vorzusehen, dessen Eingang mit einer Speisedruckpumpe verbunden ist. Dadurch wird zum Betätigen des für die Entnahme des Druckmittels aus der Arbeitsleitung verantwortlichen Ventils immer ein Steuerdruck zur Verfügung gestellt, der eine entsprechend schnelle Betätigung des Ventils ermöglicht.

Weiterhin ist es vorteilhaft die Entnahme des Druckmittels über ein Druckbegrenzungsventil durchzuführen, welches eingangsseitig mit der Arbeitsleitung und ausgangsseitig mit einer Speiseeinrichtung verbunden ist. Das aus der Arbeitsleitung entnommene Druckmittel wird dabei über das Druckbegrenzungsventil und die Speiseeinrichtung in die stromaufwärts des Hydromotors gelegene Arbeitsleitung zurückgeführt. Die saugseitige und die förderseitige Arbeitsleitung werden an der Hydropumpe vorbei kurzgeschlossen. Darüber hinaus kann eine bereits vorhandene Sicherheitseinrichtung, beispielsweise ein Druckbegrenzungsventil, in der Speiseeinrichtung in vorteilhafter Weise genutzt werden.

Ein bevorzugtes Ausführungsbeispiel eines erfindungsgemäßen hydrostatischen Antriebs ist in der Zeichnung dargestellt und wird anhand der nachfolgenden Beschreibung näher erläutert. Es zeigen:
- Fig. 1: einen hydraulischen Schaltplan eines erfindungsgemäßen hydrostatischen Antriebs und
- Fig. 2: eine schematische Darstellung des Steuerdruckregelventils sowie des Druckbegrenzungsventils der Fig. 1.

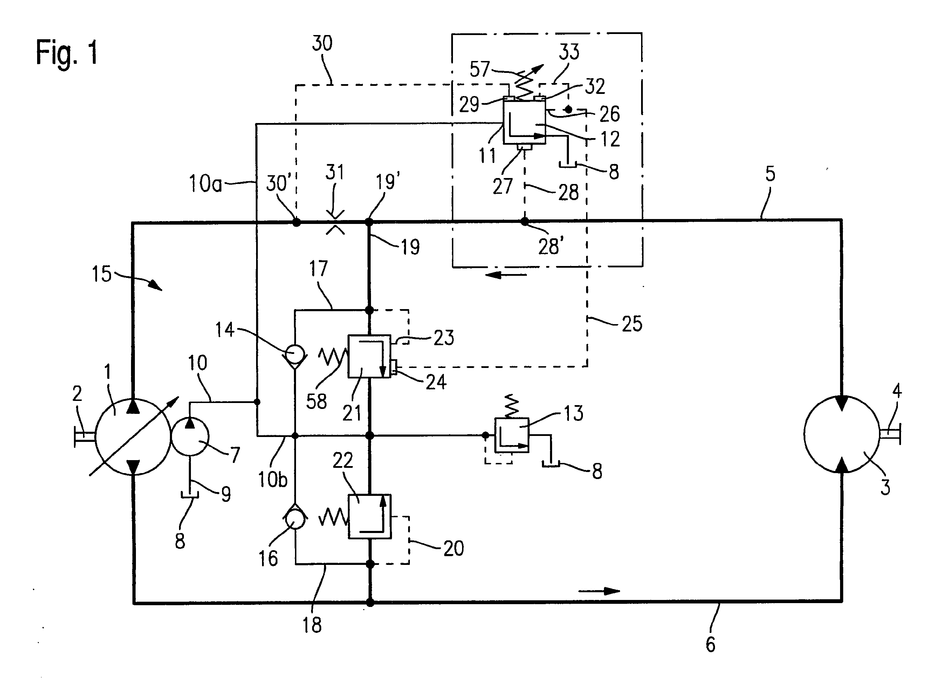

Die Fig. 1 zeigt einen hydraulischen Schaltplan eines erfindungsgemäßen hydrostatischen Antriebs. Eine Hydropumpe 1 wird über eine Antriebswelle 2 durch eine nicht dargestellte Antriebsmaschine angetrieben. Die nicht dargestellte Antriebsmaschine ist beispielsweise ein Dieselmotor eines mobilen Arbeitsgeräts. Das von der verstellbar ausgeführten Hydropumpe 1 geförderte Druckmittel wird zu einem Hydromotor 3 gefördert, der mit der Hydropumpe 1 über eine erste Arbeitsleitung 5 und eine zweite Arbeitsleitung 6 in einem geschlossenen hydraulischen Kreislauf verbunden ist. Der Hydromotor 3 kann als Konstantmotor ausgeführt sein und treibt eine Abtriebswelle 4 an, die z. B. mit einem Fahrzeugantrieb verbunden ist.

Weiterhin ist mit der Antriebswelle 2 eine vorzugsweise als Konstantpumpe und nur für eine Förderrichtung vorgesehene Speisepumpe 7 vorgesehen. Die Speisepumpe 7 saugt über eine Saugleitung 9 aus einem Tankvolumen 8 Druckmittel an und fördert es in eine Speisedruckleitung 10. Die Speisedruckleitung 10 verzweigt sich in einen ersten Speisedruckleitungszweig 10a und einen zweiten Speisedruckleitungszweig 10b. Der erste Speisedruckleitungszweig 10a ist mit einem Eingangsanschluss 11 eines Steuerdruckregelventils 12 verbunden. Um einen zu hohen Druck in der Speisedruckleitung 10 bzw. den Speisedruckleitungszweigen 10a und 10b zu verhindern, ist an den zweiten Speisedruckleitungszweig 10b ein Speisedruckbegrenzungsventil 13 vorgesehen, welches bei Überschreiten eines maximal zulässigen Drucks den zweiten Speisedruckleitungszweig 10b in das Tankvolumen 8 entspannt. Zum Einstellen des maximalen Speisedrucks ist das Speisedruckbegrenzungsventil 13 mit einer vorzugsweise einstellbaren Feder belastet.

Bei der Inbetriebnahme wird das zunächst drucklose hydraulische System durch die Speisepumpe 7 mit einem Druckmittel bedrückt. Hierzu ist der zweite Speisedruckleitungszweig 10b über ein erstes Rückschlagventil 14 mit der ersten Arbeitsleitung 5 und über ein zweites Rückschlagventil 16 mit der zweiten Arbeitsleitung 6 verbunden. Die beiden Rückschlagventile 14 und 16 sind so orientiert, dass sie ausgehend von dem zweiten Speisedruckleitungszweig 10b in Richtung der ersten Arbeitsleitung 5 bzw. der zweiten Arbeitsleitung 6 öffnen. Solange der Druck in der Speisedruckleitung 10 bzw. dem zweiten Speisedruckleitungszweig 10b höher ist als in der ersten Arbeitsleitung 5 bzw. in der zweiten Arbeitsleitung 6, öffnet das erste Rückschlagventil 14 bzw. das zweite Rückschlagventil 16 und das von der Speisepumpe 7 geförderte Druckmittel wird in die erste Arbeitsleitung 5 bzw. in die zweite Arbeitsleitung 6 gefördert. Die Speisepumpe 7 bildet zusammen mit der Speiseleitung 9, den beiden Speisedruckleitungszweigen 10a und 10b sowie den mit den Arbeitsleitungen verbundenen Rückschlagventilen 14 und 16 eine Speiseeinrichtung 15.

Das erste Rückschlagventil 14 ist in einer ersten Speiseleitung 17 angeordnet und das zweite Rückschlagventil 16 ist ein einer zweiten Speiseleitung 18 angeordnet. Die erste Speiseleitung 17 mündet in eine erste Verbindungsleitung 19 aus. Die erste Verbindungsleitung 19 verbindet die erste Arbeitsleitung 5 parallel zu dem ersten Rückschlagventil 14 mit dem zweiten Speisedruckleitungszweig 10b. In der ersten Verbindungsleitung 19 ist ein erstes Druckbegrenzungsventil 21 angeordnet.

In entsprechender Weise ist die zweite Arbeitsleitung 6 über eine zweite Verbindungsleitung 20 parallel zu dem zweiten Rückschlagventil 16 mit dem zweiten Speisedruckleitungszweig 10b verbunden. Die zweite Speiseleitung 18 mündet ebenfalls in die zweite Verbindungsleitung 20 aus, in der ein zweites Druckbegrenzungsventil 22 angeordnet ist.

Um einen unzulässigen Druckanstieg in der ersten Arbeitsleitung 5 zu verhindern, wirkt bei dem ersten Druckbegrenzungsventil 21 entgegen der Kraft einer Feder 58 auf das Druckbegrenzungsventil 21 an einem Messanschluss 23 der in der ersten Arbeitsleitung 5 wirkende Druck. Der Messanschluss 23 ist hierzu mit der ersten Verbindungsleitung 19 zwischen der ersten Arbeitsleitung 5 und dem ersten Druckbegrenzungsventil 21 verbunden.

Unterhalb eines kritischen Drucks wird durch die Feder 58 das erste Druckbegrenzungsventil 21 in seiner Ausgangsposition gehalten, in der die erste Verbindungsleitung 19 unterbrochen ist. Steigt der Druck in der ersten Arbeitsleitung 5 in unzulässiger Weise über einen kritischen Wert an, so wird durch den an dem Messanschluss 23 wirkenden Druck eine zunehmende Verbindung der ersten Verbindungsleitung 19 hergestellt. Dadurch kann Druckmittel aus der ersten Arbeitsleitung 5 über die erste Verbindungsleitung 19 in die Speiseeinrichtung 15 entweichen.

Das Druckmittel, welches über das erste Druckbegrenzungsventil 21 zu dem zweiten Speisedruckleitungszweig 10b gefördert wird, kann über das Rückschlagventil 16 und die zweite Speiseleitung 18 in die zweite Arbeitsleitung 6 gefördert werden, solange dort ein Druck herrscht der niedriger ist, als der maximal zulässige Speisedruck. Andernfalls öffnet das Speisedruckbegrenzungsventil 13 und entspannt die erste Arbeitsleitung 5 in das Tankvolumen 8.

Das zweite Druckbegrenzungsventil 22 ist in entsprechender Weise aufgebaut und öffnet, sobald der Druck in der zweiten Arbeitsleitung 6 einen durch die Feder des zweiten Druckbegrenzungsventils 22 vorgegebenen Druck übersteigt.

Das erste Druckbegrenzungsventil 21 bildet zusammen mit dem Steuerdruckregelventil 12 einen Volumenstromteiler 60 und weist zusätzlich einen Steuerdruckanschluss auf, an dem eine Steuerdruckmessfläche 24 ausgebildet ist. An der Steuerdruckmessfläche 24 kann das erste Druckbegrenzungsventil 21 ebenfalls entgegen der Feder 58 mit einer hydraulischen Kraft beaufschlagt werden. Damit kann abhängig von der an der Steuerdruckmessfläche 24 wirkenden Kraft eine Verbindung zwischen der ersten Arbeitsleitung 5 und dem zweiten Speisedruckleitungszweig 10b hergestellt werden und damit von dem Steuerdruck abhängig ein Teilvolumenstrom aus der ersten Arbeitsleitung 5 entnommen und der Speiseeinrichtung 15 zugeführt werden.

Die Steuerdruckmessfläche 24 ist über eine Steuerdruckleitung 25 mit einem Ausgangsanschluss 26 des Steuerdruckregelventils 12 verbunden. Das Steuerdruckregelventil 12 wird durch eine Einstellfeder 57 in Richtung seiner Ausgangsposition mit einer Kraft beaufschlagt. In entgegengesetzter Richtung ist das Steuerdruckregelventil 12 an einer ersten Differenzdruckmessfläche 27 mit einer hydraulischen Kraft beaufschlagbar. Die erste Differenzdruckmessfläche 27 ist hierzu mit der ersten Arbeitsleitung 5 über eine Messdruckleitung 28 verbunden. Eine weitere hydraulische Kraft wirkt an dem Steuerdruckregelventil 12 entgegengesetzt und beaufschlagt das Steuerdruckregelventil 12 an einer zweiten Differenzdruckmessfläche 29. Die zweite Differenzdruckmessfläche 29 wird mit einem über eine zweite Messdruckleitung 30 der ersten Arbeitsleitung 5 entnommenen Druck der Arbeitsleitung 5 beaufschlagt.

Die nachfolgenden Erläuterungen betreffen, sofern nichts anderes angemerkt ist, eine Förderung in Richtung von der Hydropumpe 1 über die zweite Arbeitsleitung 6 und weiter über den Hydromotor 3 in die erste Arbeitsleitung 5 zurück zu der Hydropumpe 1. Das in Richtung des Hydromotors 1 zurückströmende Druckmittel wird durch den Volumenstromteiler 60 in einen Teilvolumenstrom und der Hydropumpe 1 zugeführten Volumenstrom geteilt.

Um das Steuerdruckregelventil 12 in Abhängigkeit von dem in der ersten Arbeitsleitung 5 herrschenden Volumenstroms verstellen zu können, ist zwischen einem ersten Verbindungspunkt 28' der ersten Messdruckleitung 28 mit der ersten Arbeitsleitung 5 und einem zweiten Verbindungspunkt 30' der zweiten Messdruckleitung 30 mit der ersten Arbeitsleitung 5 eine Messdrossel 31 ausgebildet. An der ersten Differenzdruckmessfläche 27 und der zweiten Differenzdruckmessfläche 29 liegt damit ein Differenzdruck an, der proportional zu dem Volumenstrom in der ersten Arbeitsleitung 5 ist. Das Steuerdruckregelventil 12 wird damit mit einer volumenstromabhängigen resultierenden Stellkraft beaufschlagt.

Mit zunehmendem Volumenstrom wird daher entgegen der Kraft der Einstellfeder 57 das Steuerdruckregelventil 12 so verstellt, dass der erste Speisedruckleitungszweig 10a zunehmend mit einem Ausgangsanschluss 26 verbunden wird. Über den Ausgangsanschluss 26 wird dabei der an dem Eingangsanschluss des Steuerdruckregelventils 12 anliegende Speisedruck zunehmend der Steuerdruckmessfläche 24 des ersten Druckbegrenzungsventils 21 zugeführt. Infolgedessen wird das erste Druckbegrenzungsventil 21 in Richtung einer zunehmend ungedrosselten Verbindung der Verbindungsleitung 19 verstellt.

Da die erste Verbindungsleitung 19 bei der in der Fig. 1 durch Pfeile angegebenen Förderrichtung stromaufwärts der Messdrossel 31 mit der ersten Arbeitsleitung 5 verbunden ist, wird aus dem mit dem hohen Druck beaufschlagten Teil der ersten Arbeitsleitung 5 ein Teilvolumenstrom an Druckmittel abgezweigt. Dies führt zu einer Verringerung des an der Hydropumpe 1 ankommenden Volumenstroms, so dass eine Drehzahlerhöhung der die Hydropumpe 1 antreibenden Antriebsmaschine verhindert wird. Als Reaktion auf die Entnahme des Druckmittels aus der ersten Arbeitsleitung 5 wird die Druckdifferenz an der ersten Differenzdruckmessfläche 27 und der zweiten Differenzdruckmessfläche 29 verringert, so dass das Steuerdruckregelventil 12 auf Grund der Kraft der Einstellfeder 57 wieder in entgegengesetzter Richtung verstellt wird. Anstelle der Verbindung mit dem Ausgangsanschluss 26 wird nunmehr eine Verbindung zu einem Tankvolumen 8 erzeugt.

Bei der in der Fig. 1 gezeigten Anordnung wird durch die Messdrossel 31 der der Hydropumpe 1 zugeführte Volumenstrom nach der Entnahme des Teilvolumenstroms gemessen. Alternativ kann die Entnahme auch stromabwärts der zweiten Verbindungsstelle 30' erfolgen. Die Messdrossel liefert dann einen Wert über den gesamten Volumenstrom. Da abhängig von diesem gesamten Volumenstrom die Entnahme des Teilvolumenstroms geregelt wird, wird der der Hydropumpe 1 zugeführte Volumenstrom ebenfalls begrenzt.

An dem Steuerdruckregelventil 12 ist eine weitere Messfläche 32 ausgebildet, welche gleichsinnig zu der zweiten Differenzdruckmessfläche 29 auf das Steuerdruckregelventil 12 wirkt. Die weitere Messfläche 32 ist über eine dritte Messdruckleitung 33 mit dem in der Steuerdruckleitung 25 herrschenden Steuerdruck beaufschlagbar. Mit zunehmendem Steuerdruck in der Steuerdruckleitung 25 wird dadurch das Steuerdruckregelventil 12 in Richtung einer Verbindung mit dem Tankvolumen verstellt. Damit wird die Gleichgewichtsposition des Steuerdruckregelventils 12 nicht nur durch die Einstellfeder 57 sowie die in der Arbeitsleitung 5 herrschende Druckdifferenz stromaufwärts und stromabwärts der Messdrossel 31, sondern auch auf Grund der Rückkopplung des Steuerdrucks geregelt. Damit ergibt sich eine Volumenstrombegrenzung in Richtung der Hydropumpe 1 auf einen einstellbaren, konstanten Wert.

Kehrt sich die Förderrichtung durch Reversieren der verstellbaren Hydropumpe 1 um, so liegt an der zweiten Differenzdruckmessfläche 29 ein im Vergleich zur ersten Differenzdruckmessfläche 27 wegen des sich umkehrenden Druckabfalls an der Messdrossel 31 höherer Druck an. Das Steuerdruckregelventil 12 bleibt daher in seiner in der Fig. 1 dargestellten Position und die Steuerdruckleitung 25 ist nicht mit dem Speisedruck beaufschlagt. Die Steuerdruckmessfläche 24 wird daher nicht über die Steuerdruckleitung 25 mit dem Steuerdruck beaufschlagt und das erste Druckbegrenzungsventil 21 bleibt in seiner geschlossenen Position.

Die Funktion des ersten Druckbegrenzungsventils 21 ist dann dieselbe wie die des zweiten Druckbegrenzungsventils 22, nämlich die einer reinen Sicherheitseinrichtung zur Begrenzung eines maximalen Arbeitsleitungsdrucks. Damit ist für eine Förderung von Druckmittel durch die Hydropumpe 1 in die erste Arbeitsleitung 5 ein Verlust von Druckmittel durch eine unerwünschte Entnahme aus der ersten Arbeitsleitung 5 verhindert.

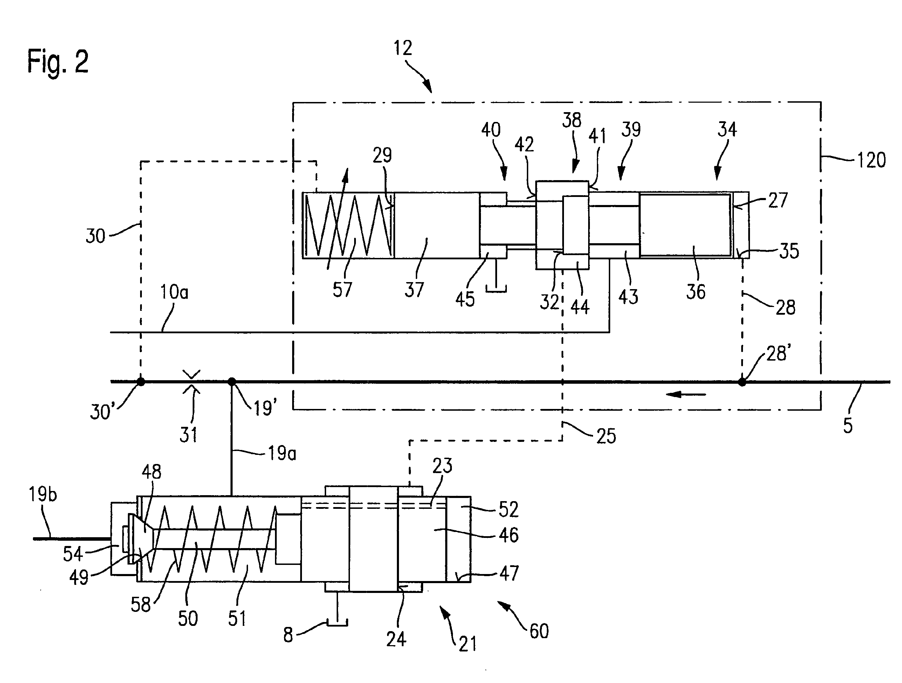

In der Fig. 2 ist ein Ausschnitt des hydraulischen Schaltplans der Fig. 1 gezeigt, bei dem das Steuerdruckregelventil 12 und das erste Druckbegrenzungsventil 21 in einer bevorzugten konstruktiven Ausführung dargestellt sind.

Das als Druckwaage 120 ausgeführte Steuerdruckregelventil 12 weist einen Stufenkolben 34 auf, der in einer gestuften Ausnehmung 35 längsverschieblich angeordnet ist. Der Stufenkolben 34 weist an seinen gegenüberliegenden Enden einen ersten Führungsabschnitt 36 bzw. einen zweiten Führungsabschnitt 37 auf. An der Stirnseite des Stufenkolbens 34 auf der Seite des ersten Führungsabschnitts 36 ist die erste Differenzdruckmessfläche 27 ausgebildet. Entsprechend ist an der gegenüberliegenden Stirnseite des Stufenkolbens 34 an dem zweiten Führungsabschnitt 37 die zweite Differenzdruckmessfläche 29 ausgebildet. Zusätzlich wirkt auf die zweite Differenzdruckmessfläche 29 die Einstellfeder 57 und beaufschlagt den Stufenkolben 34 somit in axialer Richtung mit einer Federkraft.

Mittels des ersten Führungsabschnitts 36 und des zweiten Führungsabschnitts 37 ist der Stufenkolben 34 in der gestuften Ausnehmung 35 dichtend, aber axial verschieblich gelagert. Zwischen dem ersten Führungsabschnitt 36 und dem zweiten Führungsabschnitt 37 ist an dem Stufenkolben 34 weiterhin ein Steuerbund 38 ausgebildet. Der Steuerbund 38 ist über einen ersten bzw. zweiten Distanzabschnitt 39 bzw. 40 mit dem ersten Führungsabschnitt 36 bzw. dem zweiten Führungsabschnitt 37 verbunden. Während der Steuerbund 38 auf der dem ersten Führungsabschnitt 36 zugewandten Seite vorzugsweise denselben Durchmesser aufweist wie der erste Führungsabschnitt 36, ist die dem zweiten Führungsabschnitt 37 zugewandte Seite des Steuerbunds 38 in ihrem Durchmesser demgegenüber reduziert. Dadurch entsteht an dem Steuerbund 38 eine Stufe, die identisch orientiert ist wie die zweite Differenzdruckmessfläche 29. Die Stufe bildet die weitere Messfläche 32.

An dem Übergang zwischen dem Steuerbund 38 und dem ersten Distanzabschnitt 39 bzw. dem zweiten Distanzabschnitt 40 ist eine erste Steuerkante 41 bzw. eine zweite Steuerkante 42 ausgebildet. Die gestufte Ausnehmung 35, in der der Stufenkolben 34 angeordnet ist, bildet einen ersten ringförmigen Raum 43 im Bereich des ersten Distanzabschnitts 39 aus sowie einen zweiten ringförmigen Raum 44 im Bereich des Steuerbunds 38 und einen dritten ringförmigen Raum 45 im Bereich des zweiten Distanzabschnitts 40.

Befindet sich der Stufenkolben 34 in seiner in der Fig. 2 dargestellten mittleren Position, so sind durch eine an dem Steuerbund 38 ausgebildete erste Steuerkante 41 bzw. zweite Steuerkante 42 der erste ringförmige Raum 43 von dem zweiten ringförmigen Raum 44 sowie der zweite ringförmige Raum 44 von dem dritten ringförmigen Raum 45 getrennt. Wird dagegen der Stufenkolben 34 in axialer Richtung verschoben, so wird durch die Steuerkanten 41 bzw. 42 entweder eine durchströmbare Verbindung zwischen dem ersten ringförmigen Raum 43 und dem zweiten ringförmigen Raum 44 oder dem zweiten ringförmigen Raum 44 und dem dritten ringförmigen Raum 45 erzeugt.

Der von der Speisepumpe 7 mit dem Speisedruck bedrückte erste Speisedruckleitungszweig 10a mündet in den ersten ringförmigen Raum 43 aus. Dagegen ist der zweite ringförmige Raum 44 mit der Steuerdruckleitung 25 verbunden. Wird nun, wie es unter Bezugnahme auf den hydraulischen Schaltplan der Fig. 1 bereits beschrieben wurde, durch eine Erhöhung des Volumenstroms in Richtung der Hydropumpe 1 der Stufenkolben 34 entgegen der Kraft der Einstellfeder 57 bewegt, so gibt die erste Steuerkante 41 eine durchströmbare Verbindung von dem ersten Ringraum 43 zu dem zweiten Ringraum 44 frei. Damit kann das über den ersten Speisedruckleitungszweig 10a in den ersten ringförmigen Raum 43 geförderte Druckmittel in die Steuerdruckleitung 25 strömen.

Das erste Druckbegrenzungsventil 21 weist ebenfalls einen Ventilkolben 46 auf, der in axialer Richtung verschieblich in einer Ausnehmung 47 angeordnet ist. Der Ventilkolben 46 weist ebenfalls Abschnitte unterschiedlichen Durchmessers auf, wobei an einem dieser Durchmessersprünge die Steuerdruckmessfläche 24 ausgebildet ist. Wird diese Steuerdruckmessfläche 24 mit dem über die Steuerdruckleitung 25 zugeführten Steuerdruck beaufschlagt, so wirkt auf den Ventilkolben 46 eine axiale Kraft in der Fig. 2 nach links. Diese axiale Kraft verschiebt den Ventilkolben 46 entgegen der Kraft der Feder 58 und hebt damit einen Dichtkörper 48 von einem korrespondierenden Dichtsitz 49 ab. Der Dichtkörper 48 ist als Konus ausgeführt und über eine Verbindungsstange 50 mit dem Ventilkolben 46 verbunden. Über einen ersten Abschnitt 19a der ersten Verbindungsleitung 19 ist ein Federraum 51, der die Verbindungsstange 50 umgibt permanent mit der ersten Arbeitsleitung 5 verbunden. Eine dritte Verbindungsstelle 19' zwischen dem ersten Abschnitt 19a der ersten Verbindungsleitung 19 befindet sich dabei auf derselben Seite der Messdrossel 31 wie die erste Verbindungsstelle 28' der ersten Differenzdruckmessleitung 28.

Die zu dem Federraum 51 hin orientierte Stirnseite des Ventilkolbens 46 ist mit dem in der ersten Arbeitsleitung 5 stromaufwärts der Messdrossel 31 herrschenden Druck beaufschlagt. In entgegengesetzter Richtung wird der Ventilkolben 46 in einem rückwärtigen Kolbenraum 52 an seiner Stirnfläche ebenfalls mit dem in der ersten Arbeitsleitung 5 herrschenden Druck beaufschlagt. Der rückwärtige Kolbenraum 52 ist hierzu mit dem Federraum 51 über den Messanschluss 23 verbunden, der in dem dargestellten Ausführungsbeispiel als eine dem Ventilkolben 46 in axialer Richtung durchdringende Bohrung ausgeführt ist. Auf Grund der unterschiedlichen Flächen, auf die der in der ersten Arbeitsleitung 5 stromaufwärts der Messdrossel 31 herrschende Druck wirkt, wird auch bei einer Druckerhöhung in der ersten Arbeitsleitung 5 oberhalb eines durch die Feder 58 bestimmten Druckschwellwerts der kegelstumpfförmige Dichtkörper 48 von dem Dichtsitz 49 abgehoben. Bei von dem Dichtsitz 49 abgehobenen kegelstumpfförmigen Dichtkörper 48 wird zwischen dem Dichtsitz 49 und dem kegelstumpfförmigen Dichtkörper 48 ein ringförmiger Spalt freigegeben, der den Federraum 51 mit einem Volumen 54 verbindet. Das Volumen 54 ist mit einem zweiten Abschnitt 19b der ersten Verbindungsleitung 19 verbunden. Die Funktion als reines Sicherheitsventil ist bei verschwindendem Steuerdruck damit gewahrt.

Steigt der Steuerdruck in der Steuerdruckleitung 25 und damit auch in dem zweiten ringförmigen Raum 44 an, so wirkt auf den Stufenkolben 34 an der weiteren Messfläche 32 eine mit dem Steuerdruck zunehmende hydraulische Kraft. Diese zunehmende hydraulische Kraft wirkt gemeinsam mit der Kraft der Einstellfeder 57 der Resultierenden der an der ersten und der zweiten Messfläche des Stufenkolbens 34 auf Grund Volumenstroms angreifenden Kräfte entgegen. Diese zunehmende, dem Differenzdruck entgegenwirkende Kraft, verschiebt den Stufenkolben 34 in der Fig. 2 zurück nach rechts, so dass durch die erste Steuerkante 41 die Verbindung zwischen dem ersten ringförmigen Raum 43 und dem zweiten ringförmigen Raum 44 zunehmend unterbrochen wird. Gleichzeitig wird der zweite ringförmige Raum 44 über die zweite Steuerkante 42 mit dem dritten ringförmigen Raum 45 zunehmend verbunden. Der in dem zweiten ringförmigen Raum 44 herrschende Steuerdruck kann sich daher über den dritten ringförmigen Raum 45 in Richtung des Tankvolumens 8 entspannen. Damit findet der Stufenkolben 34 jeweils in Abhängigkeit von einem bestimmten Volumenstrom in der ersten Arbeitsleitung 5 eine Gleichgewichtsposition, bei der ein bestimmter Steuerdruck erzeugt wird. In Abhängigkeit von diesem Steuerdruck wird das erste Druckbegrenzungsventil 21 geöffnet, um aus der ersten Arbeitsleitung 5 einen Teilvolumenstrom zu entnehmen.

Der Schwellwert ab dem eine Regelung des Steuerdrucks und damit die Entnahme des Teilvolumenstroms erfolgt, kann über die Einstellfeder 57 eingestellt werden.

## Patentansprüche

1. Hydrostatischer Antrieb mit einer Hydropumpe (1) und zumindest einem Hydromotor (3), der mit der Hydropumpe (2) über eine erste Arbeitsleitung (5) und eine zweite Arbeitsleitung (6) verbunden ist, wobei
zur Begrenzung eines in einer der Arbeitsleitungen (5) zu der Hydropumpe (1) hin strömenden Fördervolumens ein Volumenstromteiler (60) in dieser Arbeitsleitung (5) zur Entnahme eines Teilvolumenstroms aus der Arbeitsleitung (5) vorgesehen ist, **dadurch gekennzeichnet, dass** der Volumenstromteiler (60) ein Steuerdruckregelventil (12) zum Erzeugen eines von einem Volumenstrom in der Arbeitsleitung (5) abhängigen Steuerdrucks aufweist.

2. Hydrostatischer Antrieb nach Anspruch 1,
**dadurch gekennzeichnet,**
**dass** der Teilvolumenstrom in Abhängigkeit eines Volumenstroms in der Arbeitsleitung (5) regelbar ist.

3. Hydrostatischer Antrieb nach Anspruch 1 oder 2,
**dadurch gekennzeichnet,**
**dass** der Volumenstromteiler (60) ein mit der Arbeitsleitung (5) verbundenes Druckbegrenzungsventil (21) zur Entnahme eines Teilvolumenstroms aus der Arbeitsleitung (5) umfasst.

4. Hydrostatischer Antrieb nach Anspruch 3,
**dadurch gekennzeichnet,**
**dass** durch das Druckbegrenzungsventil (21) die Arbeitsleitung (5) mit einer Speiseeinrichtung (15) verbindbar ist.

5. Hydrostatischer Antrieb nach Anspruch 3 oder 4,
**dadurch gekennzeichnet,**
**dass** das Druckbegrenzungsventil (21) in Öffnungsrichtung mit einem Steuerdruck beaufschlagbar ist.

6. Hydrostatischer Antrieb nach einem der Ansprüche 1 bis 5,
**dadurch gekennzeichnet,**
**dass** das Steuerdruckregelventil (12) zum Erzeugen des Steuerdrucks mit einer Speisedruckpumpe (7) verbunden ist.

7. Hydrostatischer Antrieb nach einem der Ansprüche 1 bis 6,
**dadurch gekennzeichnet,**
**dass** das Steuerdruckregelventil (12) als Druckwaage (120) mit einem Stufenkolben (34) ausgebildet ist, der an entgegengesetzten Flächen (27, 29) mit einem ersten bzw. einem zweiten in der Arbeitsleitung (5) herrschenden Druck beaufschlagt ist.

8. Hydrostatischer Antrieb nach Anspruch 7,
**dadurch gekennzeichnet,**
**dass** an dem Stufenkolben (34) zusätzlich eine Einstellfeder (57) angreift.

9. Hydrostatischer Antrieb nach Anspruch 7 oder 8,
**dadurch gekennzeichnet,**
**dass** der Stufenkolben (34) an einer weiteren Messfläche (32) mit dem Steuerdruck beaufschlagt ist, der den Stufenkolben (34) in Richtung einer Reduzierung des Steuerdrucks mit einer hydraulischen Kraft beaufschlagt.

## Claims

1. Hydrostatic drive having a hydraulic pump (1) and at least one hydraulic engine (3) which is connected to said hydraulic pump (2) via a first working line (5) and a second working line (6), wherein, for the purpose of limiting a delivery volume flowing in one of the working lines (5) towards the hydraulic pump (1), a volume-flow-divider (60) is provided in the said working line (5) for the purpose of removing a partial volume flow from said working line (5), **characterised in that** the volume-flow-divider (60) has a control-pressure-regulating valve (12) for the purpose of producing a control pressure which is dependent upon a volume flow in said working line (5).

2. Hydrostatic drive according to claim 1,
**characterised in that**
the partial volume flow can be regulated in dependence upon a volume flow in the working line (5).

3. Hydrostatic drive according to claim 1 or 2,
**characterised in that**
the volume-flow-divider (60) comprises a pressure-limiting valve (21) connected to the working line (5) for the purpose of removing a partial volume flow from said working line (5).

4. Hydrostatic drive according to claim 3,
**characterised in that**
the working line (5) can be connected to a feed apparatus (15) by the pressure-limiting valve (21).

5. Hydrostatic drive according to claim 3 or 4,
**characterised in that**
the pressure-limiting valve (21) can be loaded with a control pressure in the direction of opening.

6. Hydrostatic drive according to one of claims 1 to 5,
**characterised in that**
the control-pressure-regulating valve (12) is connected to a feed-pressure pump (7) for the purpose of producing the control pressure.

7. Hydrostatic drive according to one of claims 1 to 6,
**characterised in that**
the control-pressure-regulating valve (12) is constructed as a pressure balance (120) having a stepped piston (34) which is loaded, at oppositely directed faces (27, 29), with a first and a second pressure, respectively, prevailing in the working line (5) .

8. Hydrostatic drive according to claim 7,
**characterised in that**
a setting spring (57) additionally acts on the stepped piston (34).

9. Hydrostatic drive according to claim 7 or 8,
**characterised in that**
the stepped piston (34) is loaded, at an additional measuring face (32), with the control pressure which loads said stepped piston (34) with a hydraulic force in the direction of a reduction in said control pressure.

## Revendications

1. Mécanisme d'entraînement hydrostatique avec une pompe hydraulique (1) et au moins un hydromoteur (3) qui est raccordé à la pompe hydraulique (2) par l'intermédiaire d'une première conduite de travail (5) et une seconde conduite de travail (6), dans lequel
pour limiter un débit circulant dans l'une des conduites de travail (5) vers la pompe hydraulique (1), il est prévu un répartiteur de débit volumétrique (6) dans cette conduite de travail (5) pour retirer un débit volumique partiel de la conduite de travail (5), **caractérisé en ce que** le répartiteur de débit volumique (60) présente une soupape de régulation de pression de commande (12) pour produire une pression de commande dépendant d'un débit volumique dans la conduite de travail (5).

2. Mécanisme d'entraînement hydrostatique selon la revendication 1,
**caractérisé en ce que**
le débit volumique partiel peut être régulé en fonction d'un débit volumique dans la conduite de travail (5) .

3. Mécanisme d'entraînement hydrostatique selon la revendication 1,
**caractérisé en ce que**
le répartiteur de débit volumique (60) comporte une soupape de limitation de pression (21) raccordée à la conduite de travail (5) pour retirer un débit volumique partiel de la conduite de travail (5).

4. Mécanisme d'entraînement hydrostatique selon la revendication 3,
**caractérisé en ce que**
la conduite de travail (5) peut être raccordée à un dispositif d'alimentation (15) par la soupape de limitation de pression (21).

5. Mécanisme d'entraînement hydrostatique selon la revendication 3 ou 4,
**caractérisé en ce que**
la soupape de limitation de pression (21) peut être sollicitée dans la direction d'ouverture par une pression de commande.

6. Mécanisme d'entraînement hydrostatique selon l'une des revendications 1 à 3,
**caractérisé en ce que**
la soupape de régulation de pression de commande (12) est raccordée, pour la production de la pression de commande, à une pompe de pression d'alimentation (7).

7. Mécanisme d'entraînement hydrostatique selon l'une des revendications 1 à 6,
**caractérisé en ce que**
la soupape de régulation de pression de commande (12) est conçue comme balance de pression (120) avec un piston à étage (34) qui est sollicité sur des surfaces opposées (27, 29) par une première et respectivement une seconde pression régnant dans la conduite de travail (5).

8. Mécanisme d'entraînement hydrostatique selon la revendication 7,
**caractérisé en ce que**
de plus, un ressort de réglage (57) vient en prise sur le piston à étage (34).

9. Mécanisme d'entraînement hydrostatique selon la revendication 7 ou 8,
**caractérisé en ce que**
le piston à étage (34) est sollicité sur une autre surface de mesure (32) par la pression de commande qui sollicite le piston à étage (34) dans le sens d'une réduction de la pression de commande avec une force hydraulique.
